# FASCICULE DE BREVET EUROPEEN

(11) **EP 1 399 815 B1**
(45) Date de publication et mention de la délivrance du brevet: **13.09.2006**
(21) Numéro de dépôt: 02747529.2
(22) Date de dépôt: 13.06.2002
(51) Int. Cl.: G06F 9/46, G06F 9/54

(54) **SYSTEME DE PASSERELLE ENTRE UNE PLATE-FORME ET UN MODULE LOGICIEL EXTERNE**
PROXY-SYSTEM ZWISCHEN EINER PLATTFORM UND EINEM EXTERNEN MODUL
GATEWAY SYSTEM BETWEEN A PLATFORM AND AN EXTERNAL SOFTWARE MODULE

(30) Priorité: 28.06.2001 FR 0108839
(43) Date de publication de la demande: 24.03.2004
(73) Titulaire: FRANCE TELECOM, 75015 Paris (FR)
(72) Inventeur: BROUCHOUD, Henry, F-97410 Saint Pierre (RE); DOUSSON, Christophe, F-22300 Lannion (FR)
(74) Mandataire: Cabinet Martinet & Lapoux
(86) Numéro de dépôt international: PCT/FR2002/002018
(87) Numéro de publication internationale: WO 2003/003203

(56) Documents cités:
- EP-A- 0 822 490
- WO-A-98/04971
- US-A- 6 009 464
- US-A- 6 085 030
- JEACLE K: "Java(TM): Programming for the Internet" JUST AMIGA MONTHLY (JAM), [en ligne] no. 58, décembre 1995 (1995-12), XP002196864 UK Extrait de l'Internet: <URL:http://www.jeacle.ie/publications/art icles/java/> [extrait le 2002-04-19]
- WOLLRATH A ET AL: "A DISTRIBUTED OBJECT MODEL FOR THE JAVA(TM) SYSTEM" CONFERENCE ON OBJECT-ORIENTED TECHNOLOGIES, XX, XX, 17 juin 1996 (1996-06-17), pages 219-231, XP000997457

## Description

La présente invention concerne de manière générale l'interopérabilité entre des agents logiciels, et plus particulièrement un système pour faire communiquer une plate-forme et un module logiciel qui est externe à celle-ci et qui a été développé d'une manière indépendante de la plate-forme.

Des applications logicielles reposant sur une technologie d'agents logiciels commencent à être utilisées. Toutefois elles sont en général propriétaires puisque les différents agents impliqués dans l'application ont été développés selon des protocoles et primitives de communication mis en commun entre les agents.

Actuellement, le groupe de standardisation FIPA (Fundation for Intelligent Physical Agents) promeut le développement de spécifications favorisant l'interopérabilité d'applications à base d'agents logiciels et particulièrement de spécifications concernant des plates-formes d'exécution des agents.

La demande de brevet européen EP 0 822 490 concerne l'initialisation et l'exécution d'une application entre un noeud de serveur et un noeud de client dans un système distribué. Ces deux phases sont basées sur un mécanisme d'échange implémenté en langage orienté objet. Une application dite moteur de présentation est chargée depuis le noeud de serveur dans le noeud de client à la demande d'une applet d'initialisation dans le noeud de client qui a fourni le nom de l'application. Puis pour exécuter l'application, une connexion de serveur est ouverte dans le serveur par le moteur afin de focaliser celui-ci vers des services de présentation et ses capacités d'accès au web.

La EP 0 822 490 présente ainsi une modularité des deux composants d'une application sélectionnée par le noeud de client, l'un des composants étant téléchargeable depuis le noeud de serveur.

Selon le brevet US 6 009 464, un programme d'application (navigateur) dans une machine client ignore initialement le protocole de réseau nécessaire pour communiquer avec un serveur de réseau. Un document est téléchargé depuis un serveur de document vers le programme d'application, et du code (applet) est téléchargé depuis un serveur de code dans le serveur de document vers le programme d'application dans la machine client. Le code inclut un protocole de réseau qui est nécessaire pour communiquer avec le serveur de réseau, c'est-à-dire invoquer une méthode d'un objet résidant dans le serveur de réseau. Le protocole de réseau est ainsi téléchargé à la demande de la machine client sans aucune adaptation dynamique.

Le brevet US 6 085 030 concerne une interaction distribuée entre une application sur un noeud de client et des composants logiciels hétérogènes implémentés sur un noeud de serveur dans un réseau. A la suite d'une demande de composant à exécuter localement ou extérieurement depuis l'application, un composant approprié est offert par un registre de composant sur la base d'un modèle d'objet demandé par l'application de manière à construire une interface appropriée entre le composant offert et le modèle d'objet demandé via un serveur de gestion de composant et donc entre l'application demanderesse et le composant. Ce brevet vise ainsi un mécanisme de construction d'application déployée en plusieurs composants dont les communications entre eux sont à adapter.

Tous ces documents ne résolvent pas à la fois les deux problèmes suivants.

Le premier problème concerne le développement d'agents autonomes dans l'exécution mais aussi dans la communication et la négociation avec d'autres agents de la plate-forme. En d'autres termes, l'invention ambitionne d'utiliser un agent, en tant que module logiciel externe, d'une manière ouverte pour être apte à communiquer avec d'autres agents, a priori inconnus lors de sa conception.

Le deuxième problème concerne le développement de bibliothèques d'outils de programmation relatifs à une plate-forme déterminée de manière à faciliter le développement d'agents à déployer sur la plate-forme. Cependant, un agent développé pour fonctionner sur la plate-forme déterminée est dépendant de celle-ci aussi bien en termes d'outil de programmation que de langage de programmation. En conséquence, un changement de plate-forme impose un autre développement presque complet de l'agent logiciel initialement prévu pour la plate-forme déterminée. L'invention vise également à remédier au défaut de portabilité difficilement acceptable des agents développés pour une plate-forme déterminée.

L'objectif principal de l'invention est ainsi de résoudre ces deux problèmes afin à la fois de permettre l'intégration de logiciels externes déjà existants au sein de la plate-forme et le développement d'agents logiciels indépendants de la plate-forme afin qu'ils soient vus par les autres agents de la plate-forme comme de véritables agents.

Pour atteindre cet objectif, un système pour faire communiquer une plate-forme d'exécution d'agent logiciel et un module logiciel externe, est caractérisé conformément à la revendication 1.

Grâce à la génération dynamique d'une passerelle entre le module logiciel externe et la plate-forme, la plate-forme considère le module logiciel externe comme un agent qui peut communiquer avec les autres agents déployés sur la plate-forme de la même manière qu'ils communiquent entre eux. Le caractère dynamique de la passerelle signifie qu'elle n'existe pas nécessairement a priori au lancement de la plate-forme, mais peut être chargée ou téléchargée à la demande par le module logiciel externe sans toutefois fournir la passerelle elle-même.

Contrairement à la technique antérieure selon laquelle un client s'adapte dynamiquement aux services mis à disposition par un serveur (plate-forme), mais uniquement dans la limite de ceux-ci, l'invention adapte une plate-forme aux besoins spécifiques d'un module logiciel externe en générant une passerelle dynamiquement et dont, éventuellement un moyen spécifique peut être adapté aux besoins du composant ayant pris l'initiative de l'échange. Ce mécanisme permet notamment l'intégration au sein d'une plate-forme de logiciels externes existant antérieurement à celle-ci, sans modification de leur implémentation mais en adaptant "localement" et de façon non restrictive la plate-forme à leurs spécificités.

Selon d'autres caractéristiques, le module logiciel externe commande le téléchargement et l'exécution du moyen spécifique de la passerelle. L'adresse transmise par le module logiciel externe désigne une bibliothèque de passerelles ou une bibliothèque de moyens spécifiques liée au moyen de génération ou reliée à celui-ci à travers un réseau de télécommunications. Le moyen spécifique peut comprendre un moyen pour crypter et décrypter les messages. Le moyen générique peut distinguer des trames de gestion de communication et des trames de message transmises par un moyen d'adaptation du module logiciel externe et extraire des messages des trames de message pour que le moyen spécifique les décode et les dépose dans la plate-forme. Le moyen d'adaptation peut convertir des unités de données internes au module logiciel externe en des messages selon un langage spécifique à la plate-forme, inclus dans des trames à transmettre à la passerelle et inversement convertir des messages codés par le moyen spécifique et transmis dans des trames de message en des unités de données.

En général, le moyen de génération génère une passerelle prédéterminée par défaut lorsqu'au moins l'un des paramètres communiqués par le module logiciel externe est indéfini. Les paramètres peuvent être notamment une classe de passerelle, une adresse de classe de passerelle et un nom de passerelle.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un système de passerelle selon l'invention ;
- la figure 2 est un algorithme de génération de passerelle mis en oeuvre dans un agent serveur selon l'invention ; et
- les figures 3 et 4 sont respectivement des algorithmes de réception et d'émission de message mis en oeuvre dans une passerelle selon l'invention connectée à un module logiciel externe.

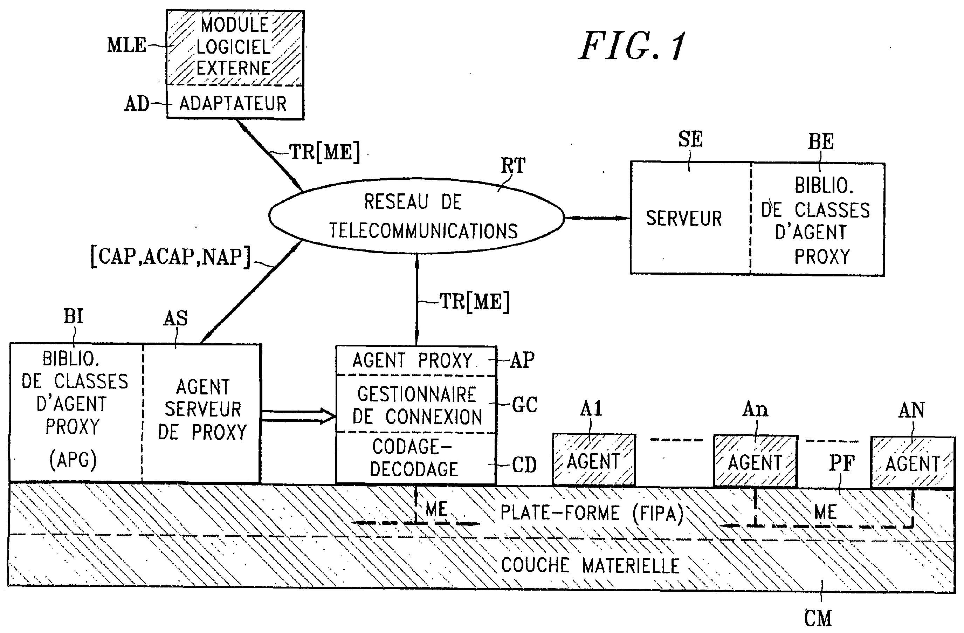

Une plate-forme PF et un module logiciel externe MLE à déployer sur la plate-forme au moyen d'un système de passerelle AS-AP selon l'invention sont illustrés par des blocs hachurés dans la figure 1 afin d'indiquer qu'ils font partie de l'état de la technique.

La plate-forme PF est une infrastructure logicielle sur laquelle des agents logiciels A1 à AN, avec N ≥ 1, sont déployés. Un agent quelconque An, avec 1 ≤ n ≤ N, est enregistré sur la plate-forme PF pour communiquer avec les autres agents A1 à AN enregistrés sur ladite plate-forme PF, ou avec d'autres agents enregistrés sur une autre plate-forme compatible avec la plate-forme PF. La plate-forme PF gère notamment l'annuaire des agents déployés sur celle-ci, le cycle de vie des agents ainsi que les communications entre eux. Cette gestion des agents dans la plate-forme PF est conforme aux spécifications du groupe de standardisation FIPA (Fundation for Intelligent Physical Agents) qui favorise une interopérabilité des applications à base d'agents logiciels. En d'autres termes, la plate-forme PF gère la localisation des agents et le transport de messages entre agents. En pratique, la plate-forme logicielle PF repose sur une couche matérielle CM qui peut être répartie dans plusieurs machines qui communiquent par un réseau de télécommunications.

Un agent An est une entité logicielle paramétrable dotée d'un état interne, d'un comportement, et d'un processus d'exécution autonome, et implémente un ou plusieurs services. L'agent interagit avec d'autres agents à travers la plate-forme PF au moyen de messages ME de langage de communication standardisé ACL (Agent Communication Langage) dont la syntaxe et la sémantique sont également spécifiées par le groupe de standardisation FIPA. Bien que de la même famille que le concept d'objet, l'agent An diffère des traditionnels mécanismes client-serveur par le caractère asynchrone des communications avec l'agent et par le caractère plus abstrait des fonctions (médiation, collaboration, coopération, combinaison, etc.) remplies par l'agent. Le concept d'agent est issu des techniques de l'intelligence artificielle et est souvent assimilé par anthropomorphisme à un "agent humain", avec "ses croyances", "intentions", "buts" et "comportements dirigés par les objectifs".

Le langage ACL des messages ME échangés entre les agents à travers la plate-forme PF suppose que les agents communiquent par un niveau d'abstraction élevé du dialogue entre agents, c'est-à-dire que le contenu des messages de communication ME en langage ACL est constitué de formulations sur l'environnement des agents ou de leurs connaissances internes. Pour décrire la sémantique du langage ACL, le groupe de standardisation FIPA définit un modèle d'agent basé sur ses "attitudes mentales". Néanmoins ce modèle est une spécification abstraite et ne requiert en aucun cas ni une architecture particulière ni un modèle cognitif particulier d'agent.

Par exemple, la plate-forme PF est la plate-forme JADE (Java Agent DEvelopment framework) développée par le CSELT (Telecom Italia), conforme au standard FIPA, et utilisée notamment au sein du projet européen FACTS (FIPA Agent Communication Technologies and Services). La plate-forme JADE offre un environnement permettant de développer et de retirer des bogues dans des agents FIPA en langage Java.

Le module logiciel externe MLE est implémenté dans une plate-forme matérielle et logicielle externe à la plate-forme PF et peut être relié à celle-ci à travers un réseau de télécommunications RT, incluant typiquement le réseau internet. A priori, le module logiciel MLE n'est pas adapté à communiquer directement avec la plate-forme PF, c'est-à-dire n'est pas adapté au standard FIPA des agents A1 à AN et la représentation des données interne au module logiciel MLE est différente des messages au format ACL.

Selon une autre hypothèse, la complexité du module logiciel MLE interdit toute réécriture de celui-ci conformément au standard FIPA utilisé par la plate-forme PF.

Comme montré à la figure 1 par deux blocs non hachurés, le système de passerelle selon l'invention comprend essentiellement un agent serveur de proxy AS installé en permanence sur la plate-forme PF, et un agent proxy AP en tant que passerelle au moins temporaire entre la plate-forme PF et le module logiciel externe MLE, générée dynamiquement par l'agent serveur de proxy AS. Du côté du module logiciel externe MLE, le système de passerelle comprend un adaptateur de messages AD qui échange des trames de message TR[ME] avec les agents AS et AP à travers le réseau de télécommunications RT.

L'agent serveur de proxy AS est conforme au standard FIPA et est donc adapté à la plate-forme PF au même titre que les autres agents A1 à AN. L'agent serveur AS a pour rôle de générer un agent proxy AP en réponse à une demande du module logiciel externe MLE contenant des paramètres définissant l'agent proxy à générer. Le code exécutable de l'agent proxy AP demandé par le module logiciel MLE est soit chargé dynamiquement sur la plate-forme PF depuis une bibliothèque interne de classes d'agent proxy BI liée à l'agent serveur AS, soit téléchargé dynamiquement depuis une bibliothèque externe de classes d'agent proxy BE desservie par un serveur de gestion d'agent proxy SE relié au réseau de télécommunication RT. Après la génération de l'agent proxy AP demandée par le module MLE, l'agent serveur AS établit une connexion entre le module logiciel MLE et l'agent proxy généré AP. L'agent serveur de proxy AS a des fonctionnalités indépendantes de celles des modules logiciels externes demandeurs, tels que le module MLE, et est donc écrit de façon générique pour être introduit sur la plate-forme PF comme un composant logiciel figé.

L'agent proxy AP à générer à la demande du module MLE est également conforme au standard FIPA et est donc adapté à la plate-forme PF de manière à communiquer avec les autres agents A1 à AN, par l'intermédiaire de messages ME en langage ACL. L'agent proxy AP constituant la passerelle générée dynamiquement selon l'invention est dit proxy parce qu'il représente le module logiciel externe MLE sur la plate-forme PF afin que tout autre agent An déployé sur la plate-forme FP "voit" le module logiciel externe MLE comme un agent enregistré à part entière. Ainsi, l'agent proxy AP dirige tous les messages ME en langage ACL qu'il reçoit des autres agents A1 à AN, sous forme de trames TR vers le module de logiciel externe MLE à travers le réseau RT, et réciproquement extrait des messages ME dans des trames transmises par le module logiciel MLE à travers le réseau RT, pour les adresser à des agents destinataires A1 à AN à travers la plate-forme PF.

L'agent proxy AP est divisé fonctionnellement en un moyen générique indépendant du module logiciel externe MLE et en un moyen spécifique au module logiciel externe MLE.

Le moyen générique est un gestionnaire de connexion GC qui gère les communications à travers la connexion entre l'adaptateur AD lié au module logiciel MLE et l'agent proxy AP. Le gestionnaire de connexion GC gère également la transmission des messages ME échangés avec le module MLE, c'est-à-dire transmis à celui-ci et reçus de celui-ci, de manière indépendante du module MLE. Par conséquent, le gestionnaire de connexion GC est, à cause de son caractère générique, contenu dans l'agent serveur de proxy AS lors de l'implémentation de l'agent AS sur la plate-forme PF, et par conséquent, de préférence, les bibliothèques de classes d'agent proxy BI et BE ne sont relatives qu'à des moyens spécifiques à des agents proxy. En d'autres termes, le gestionnaire de connexion générique GC est écrit une fois pour toutes en fonction du standard FIPA par le développeur de l'agent serveur de proxy AS.

Par exemple, le module logiciel externe MLE est un moteur de reconnaissance de chronique qui reconnaît des chroniques temporelles dans un flot d'événements, par exemple des alarmes d'équipements de réseau supervisées respectivement par quelques-uns des agents A1 à AN de la plate-forme PF et le module MLE. Un tel moteur de reconnaissance permet de reconnaître une chronique d'événements prédéterminés signalés respectivement par les agents précités et de la transmettre à un agent prédéterminé de gestion de chronique.

Le moyen spécifique au module logiciel externe MLE et inclus dans l'agent proxy AP constitue une interface de codage et décodage CD afin de décoder des trames TR transmises par l'adaptateur AD du module MLE en des messages ME en langage ACL à retransmettre à travers la plate-forme PF et à coder des messages ME en langage ACL communiqués par des agents A1 à AN à travers la plate-forme PF en des trames TR transmis à l'adaptateur AD du module MLE. L'interface de codage et décodage est ainsi sélectionnée et prélevée dans les bibliothèques BI et BE, particulièrement lorsque l'interface CD est une interface propriétaire relative à un module logiciel externe spécifique.

Pour certaines applications, un module logiciel externe MLE n'a pas besoin d'utiliser un codage/décodage particulier. Une interface de codage et décodage générique, ou plus généralement un agent proxy générique APG, est sélectionné par défaut par l'agent serveur de proxy AS lors de la génération de l'agent proxy AP. Dans ce cas, le développeur n'implémente que l'adaptateur AD en dépendance du format interne de données propre au module logiciel externe.

Selon une autre variante, le module logiciel externe privilégie la sécurité et renforce les codage et décodage dans l'interface CD en y introduisant des cryptage et décryptage des messages ACL échangés avec le module logiciel externe MLE.

L'adaptateur AD établit le lien entre le module logiciel externe MLE et l'agent proxy AP. Il convertit les messages ME en langage ACL extraits des trames TR transmises par l'agent proxy AP à travers le réseau RT en des unités de données propres au logiciel interne au module MLE, et inversement convertit des unités de données produites par le module MLE en des messages ME en langage ACL introduits dans des trames TR à transmettre à l'agent proxy AP. L'adaptateur AD est en général spécifique au module logiciel externe MLE et est développé dans le même langage que celui-ci.

De ce qui précède, il apparaît que le développeur d'un agent proxy AP pour un module logiciel externe MLE doit développer l'adaptateur AD et, le cas échéant, l'interface de codage et décodage CD, lorsque celle-ci est spécifique au module logiciel externe.

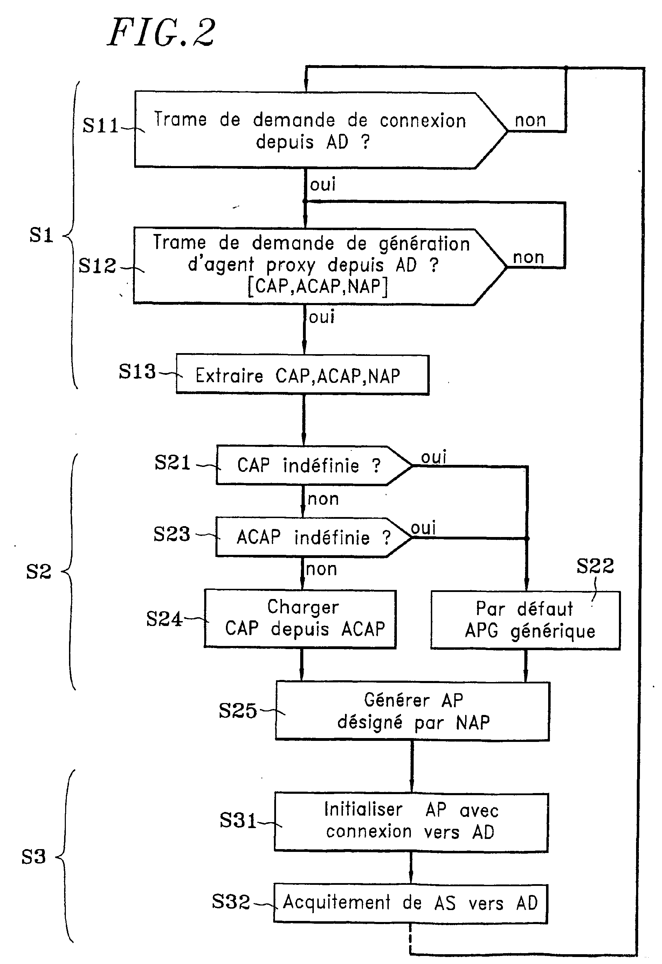

En référence maintenant à la figure 2, la génération dynamique de l'agent proxy AP en tant que passerelle comprend trois étapes principales S1, S2 et S3 relatives à la connexion entre l'adaptateur AD et l'agent serveur de proxy AS, au chargement de l'agent de proxy AP désigné par l'adaptateur AD et à l'initialisation de l'agent proxy désigné AP afin d'échanger des messages codés avec l'adaptateur AD.

Au début de l'étape principale S1, l'agent serveur de proxy AS surveille la réception d'une trame de demande de connexion transmise par l'adaptateur AD à l'étape S11.

A l'étape S11, la connexion est supposée être établie à travers le réseau de télécommunications RT, bien qu'en variante, le module logiciel externe MLE avec l'adaptateur AD puisse être beaucoup plus proche de l'agent serveur de proxy AS, par exemple lorsque le module de logiciel externe MLE est installé sur une machine voisine de celle où est installé l'agent serveur de proxy AS, ou est installé dans un module matériel inclus dans la même machine où est installé l'agent serveur de proxy AS. Toutefois, la liaison du module logiciel externe MLE et de l'agent serveur de proxy AS à travers le réseau de télécommunications RT assure une indépendance du module de logiciel MLE vis-à-vis de la plate-forme PF et donc vis-à-vis du matériel et du système d'exploitation de celle-ci et offre ainsi la possibilité de faire de la répartition de charge. En effet, si l'agent serveur de proxy AS estime que la plate-forme PF est surchargée, il refuse la connexion demandée par le module logiciel MLE à l'étape S11 et de préférence propose d'orienter le module MLE vers une connexion avec un autre agent serveur de proxy s'exécutant sur une autre plate-forme.

Si l'adaptateur AD a demandé d'être connecté à l'agent serveur AS, ce dernier passe ensuite dans un état d'attente de trame de demande de génération d'agent proxy à l'étape S12. Une trame de demande de génération d'agent proxy comprend notamment le nom NAP de l'agent proxy AP demandé par le module MLE via l'adaptateur AD, le nom CAP de la classe de l'agent proxy demandé AP, c'est-à-dire l'identification du code exécutable de l'agent proxy, et l'adresse ACAP de la classe de l'agent proxy demandé AP qui détermine la localisation où l'agent proxy demandé peut être lu. Par exemple, lorsque l'agent proxy demandé AP est dans une classe enregistrée dans la bibliothèque externe BE, l'adresse ACAP est une adresse internet URL (Uniform Resource Locator), ou une adresse interne à la bibliothèque BI si l'agent proxy demandé AP est localisé dans celle-ci. Ainsi, à l'étape suivante S13, l'agent serveur AS extrait de la trame de demande de génération reçue les paramètres définis ci-dessus NAP, CAP et ACAP relatifs au nom, à la classe et à l'adresse de classe de l'agent proxy demandé AP.

Après avoir extrait les paramètres transmis par le module logiciel externe MLE à l'étape S13, l'agent serveur de proxy AS analyse successivement le nom CAP de la classe de l'agent proxy demandé et l'adresse ACAP de la classe de l'agent proxy demandé, à l'étape principale suivante S2 comportant des étapes S21 à S25.

A l'étape S21, si la classe CAP de l'agent demandé AP est indéfinie, l'agent serveur AS sélectionne par défaut à l'étape S22 une classe d'agent proxy prédéterminée CP qui contient l'agent proxy générique APG et ainsi le code de l'agent proxy à créer. De préférence, la classe prédéterminée est intégrée dans la bibliothèque interne BI liée à l'agent serveur AS.

Que la classe d'agent proxy demandé soit définie ou indéfinie à l'étape S21, l'algorithme de génération d'agent proxy peut passer à l'étape S23 où l'agent serveur de proxy AS considère l'adresse extraite ACAP de la classe d'agent demandé. Si l'adresse ACAP est indéfinie, l'agent serveur AS sélectionne la classe d'agent proxy CAP déterminée par défaut, en l'occurrence sélectionne la bibliothèque interne BI et une adresse prédéterminée correspondant à l'agent proxy générique APG, à l'étape S22. Si à l'étape S23, l'adresse extraite ACAP est définie, l'agent serveur AS charge la classe CAP de l'agent proxy à générer désignée par l'adresse ACAP qui peut désigner la bibliothèque BE ou BI. Le nom NAP extrait de la trame reçue est attribué à l'agent proxy ainsi généré à l'étape S25.

Il est rappelé que, en général, lorsque l'agent proxy demandé AP contient un moyen générique GC et un moyen spécifique CD, seulement le moyen spécifique est lu à l'adresse de classe ACAP, le moyen générique étant fourni directement par l'agent serveur AS.

Après l'étape S25, l'agent serveur de proxy AS passe à la dernière étape principale S3 pour initialiser l'agent proxy AP généré à l'étape S25 en lui fournissant la connexion utilisée entre l'agent serveur AS et l'adaptateur AD établie à l'étape S11. Puis l'agent serveur AS émet sur la connexion précitée à l'étape S32 une trame d'acquittement vers l'adaptateur AD qui signifie que l'agent proxy AP demandé est correctement créé et opérationnel.

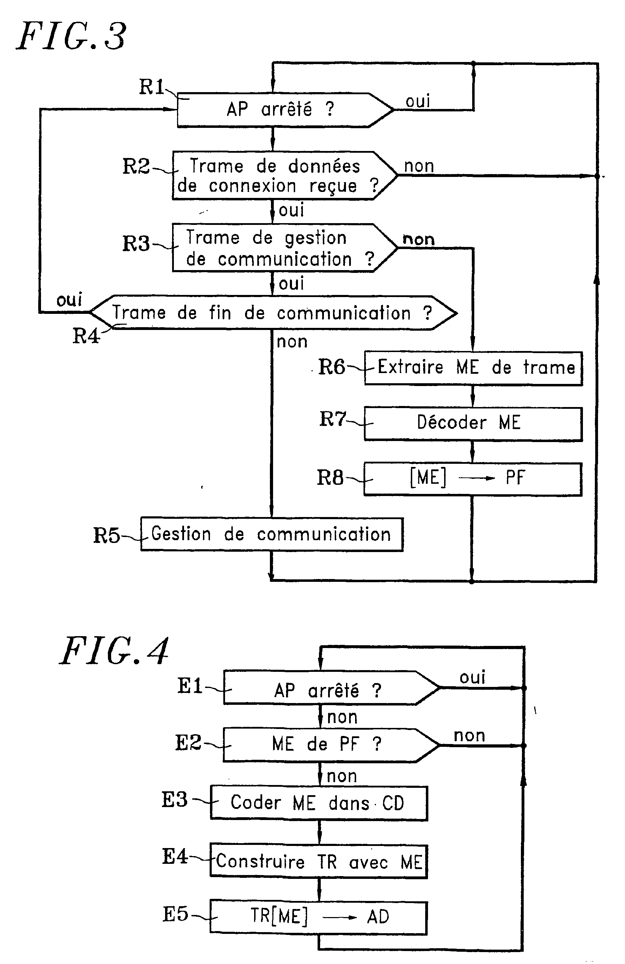

Après réception de la trame d'acquittement par l'adaptateur AD, la connexion précitée entre l'agent serveur AS et l'adaptateur AD est désormais utilisée entre l'agent proxy AP et l'adaptateur AD pour le fonctionnement "normal" de transmission de message et de gestion de cette connexion. Puis l'agent serveur AS se remet en attente d'une autre demande de connexion à l'étape S11. L'agent proxy généré AP est alors prêt à échanger des trames TR de message ME en langage ACL avec l'adaptateur AD selon les algorithmes des figures 3 et 4.

Dans l'agent proxy AP, les algorithmes de boucle de réception de message et de boucle d'émission de message sont exécutés en parallèle. Ces deux algorithmes sont génériques, et seules les fonctions de décodage de message à la réception et de codage de message à l'émission sont spécifiques dans l'interface de codage et décodage CD en dépendance du module logiciel externe MLE.

L'algorithme de réception montré à la figure 3 comprend des étapes R1 à R8.

A l'étape R1, tant que l'agent proxy AP n'est pas arrêté à la suite d'une trame de fin de communication, celui-ci surveille dans la connexion avec l'adaptateur AD du module logiciel externe MLE la réception d'une trame de données de connexion à l'étape suivante R2.

Si la trame de données de connexion est une trame de gestion de communication à l'étape R3, le gestionnaire de connexion GC dans l'agent proxy AP vérifie si la trame de gestion reçue est une trame de fin de communication à l'étape R4. Si la trame de gestion reçue indique effectivement une fin de communication, l'algorithme revient à l'étape R1 pour arrêter le proxy. Par -contre, si à l'étape R4, la trame de gestion de communication reçue est différente d'une trame de fin de communication, le gestionnaire de connexion GC poursuit la gestion de la communication notamment en surveillant la réception de trames de gestion de communication à l'étape R5.

En revenant à l'étape R3, si la trame reçue est une trame de message TR, l'interface de codage et décodage CD extrait le message de la trame reçue à l'étape R6, décode le message ME extrait à l'étape R7 lorsque ce message a été codé dans l'adaptateur AD, et finalement à l'étape R8 dépose le message décodé en langage ACL dans une boîte aux lettres de la plate-forme FIPA afin que celle-ci dirige le message vers l'agent destinataire A1 à AN désigné dans le message.

L'algorithme d'émission montré à la figure 4 est plus simple que l'algorithme de réception décrit ci-dessus puisque le gestionnaire de connexion GC dans l'agent proxy AP n'intervient pratiquement pas pour l'émission d'une trame depuis l'agent proxy AP.

La boucle d'émission comprend des étapes E1 à E5.

Tant que l'agent proxy AP n'est pas arrêté à l'étape E1 à la suite d'une fin de communication, l'interface de codage et décodage CD est en attente d'un message ME en langage ACL provenant de la plate-forme PF à l'étape E2. Si un message ME est reçu de la plate-forme PF, l'interface CD code le message ACL en un message codé à l'étape E3, puis construit une trame contenant le message codé à l'étape E4, et finalement envoie la trame construite sur la connexion avec l'adaptateur AD à l'étape E5.

L'adaptateur AD présente des fonctions d'adaptation spécifiques analogues à celles des codage et décodage dans l'agent proxy AP afin de convertir des unités de données internes au module logiciel MLE en des messages ME au format ACL à inclure dans des trames TR dans la connexion avec l'agent proxy AP, et inversement afin de convertir des messages ME au format ACL dans des trames TR transmises par l'agent AP en des unités de données propres à être traitées par le module logiciel MLE.

En se référant à l'exemple précité selon lequel l'agent proxy AP représente un module logiciel externe MLE qui implémente un moteur de reconnaissance de chronique et est enregistré dans la plate-forme PF par exemple pour transmettre des événements, tels que des alarmes, relatifs à un équipement particulier surveillé par le module logiciel externe MLE, une chronique reconnue par le module MLE génère un événement qui lui-même génère un message ME encapsulé dans une trame TR reçue par l'agent proxy AP. Ce message ME est ensuite transmis par l'agent proxy AP, via la plate-forme PF, vers un agent déterminé, par exemple l'agent An, qui s'était auparavant déclaré intéressé auprès de l'agent proxy AP par la reconnaissance de cette chronique. L'agent déterminé An peut ensuite agir en conséquence.

De manière connue, un outil de programmation est implémenté dans la plate-forme PF de manière à tracer les messages ME en langage ACL échangés entre les agents A1 à AN et AP de la plate-forme afin de visualiser sur une console de surveillance chaque message ME par un vecteur dont l'origine correspond à un bloc schématisant l'agent émetteur du message et dont l'extrémité orientée correspond à un bloc schématisant l'agent récepteur du message.

Selon un autre exemple de réalisation, la plate-forme PF repose sur le système d'exploitation WINDOWS (marque déposée) avec des "agents" constitués par des composants logiciels, et le module logiciel externe MLE contient un logiciel développé sur le système d'exploitation UNIX (marque déposée).

Ainsi un "agent" au sens de l'invention définie ci-après désigne un composant, dit également module, entité ou unité, de traitement logiciel qui assure de manière autonome des fonctions prédéterminées et qui peut être installé sur une plate-forme compatible avec le composant afin qu'il communique à travers la plate-forme avec d'autres agents installés sur la plate-forme.

## Revendications

1. Système pour faire communiquer une plate-forme d'exécution d'agent logiciel (PF) et un module logiciel externe (MLE), **caractérisé en ce qu'**il comprend un moyen de génération (AS) installé sur la plate-forme (PF) et dialoguant avec le module logiciel externe (MLE) pour générer dynamiquement une passerelle (AP) définie en fonction de paramètres (CAP, ACAP) communiquées par le module logiciel externe afin que le module logiciel externe soit équivalent à travers la passerelle à un agent déployé sur la plate-forme, et la passerelle (AP) comprend un moyen générique (GC) chargé depuis le moyen de génération (AS) pour gérer la connexion entre la passerelle (AP) et le module logiciel externe (MLE), et un moyen spécifique (CD) permettant d'adapter la passerelle générée par le moyen de génération (AS) aux besoins spécifiques du module logiciel externe (MEL), chargé à travers le moyen de génération (AS) depuis une adresse (ACAP) transmise par le module logiciel externe (MLE) vers la plate-forme (PF) pour coder des messages transmis par la plate-forme (PF) vers le module logiciel externe (MLE) et décoder des messages transmis par le module logiciel externe vers la plate-forme.

2. Système conforme à la revendication 1, dans lequel l'adresse (ACAP) transmise par le module logiciel externe désigne une bibliothèque de passerelles (BI, BE) ou une bibliothèque de moyens spécifiques liée au moyen de génération (AS) ou reliée à celui-ci à travers un réseau de télécommunications (RT).

3. Système conforme à la revendication 1 ou 2, dans lequel le moyen spécifique (CD) comprend un moyen pour crypter et décrypter les messages.

4. Système conforme à l'une quelconque des revendications 1 à 3, dans lequel le moyen générique (GC) distingue (R3) des trames de gestion de communication et des trames de message transmises par un moyen d'adaptation (AD) du module logiciel externe (MLE) et extrait (R6) des messages (ME) des trames de message pour que le moyen spécifique (CD) les décode (R7) et les dépose (R8) dans la plate-forme (PF), et le moyen d'adaptation (AD) convertit des unités de données internes au module logiciel externe (MLE) en des messages (ME) selon un langage spécifique à la plate-forme (PF), inclus dans des trames à transmettre à la passerelle et inversement convertit (E3, E4, E5) des messages (ME) codés par le moyen spécifique (CD) et transmis dans des trames de message en des unités de données.

5. Système conforme à l'une quelconque des revendications 1 à 4, dans lequel le moyen de génération (AS) génère (S22) une passerelle prédéterminée par défaut (AGP) lorsqu'au moins l'un des paramètres (CAP, ACAP) communiqués par le module logiciel externe (MLE) est indéfini.

6. Système conforme à l'une quelconque des revendications 1 à 5, dans lequel les paramètres sont notamment une classe de passerelle (CPA), une adresse de classe de passerelle (ACAP) et un nom de passerelle (NAP).

## Claims

1. System for effecting communication between a software agent execution platform (PF) and an external software module (MLE), **characterized in that** it comprises a means of generation (AS) installed on the platform (PF) and dialoguing with the external software module (MLE) so as to dynamically generate a gateway (AP) defined as a function of parameters (CAP, ACAP) communicated by the external software module so that the external software module is equivalent through the gateway to an agent deployed on the platform, and the gateway (AP) comprises a generic means (GC) loaded from the means of generation (AS) so as to manage the connection between the gateway (AP) and the external software module (MLE), and a specific means (CD) making it possible to adapt the gateway generated by the means of generation (AS) to the specific requirements of the external software module (MLE), loaded through the means of generation (AS) from an address (ACAP) transmitted by the external software module (MLE) to the platform (PF) so as to code messages transmitted by the platform (PF) to the external software module (MLE) and to decode messages transmitted by the external software module to the platform.

2. System in accordance with Claim 1, in which the address (ACAP) transmitted by the external software module designates a library of gateways (BI, BE) or a library of specific means which is related to the means of generation (AS) or linked to the latter through a telecommunications network (RT).

3. System in accordance with Claim 1 or 2, in which the specific means (CD) comprises a means for encrypting and decrypting the messages.

4. System in accordance with any one of Claims 1 to 3, in which the generic means (GC) distinguishes (R3) communication management frames and message frames transmitted by a means of adaptation (AD) of the external software module (MLE) and extracts (R6) messages (ME) from the message frames so that the specific means (CD) decodes them (R7) and deposits them (R8) in the platform (PF), and the means of adaptation (AD) converts data units internal to the external software module (MLE) into messages (ME) according to a language specific to the platform (PF), included in frames to be transmitted to the gateway and conversely converts (E3, E4, E5) messages (ME) coded by the specific means (CD) and transmitted in message frames into data units.

5. System in accordance with any one of Claims 1 to 4, in which the means of generation (AS) generates (S22) a predetermined default gateway (AGP) when at least one of the parameters (CAP, ACAP) communicated by the external software module (MLE) is undefined.

6. System in accordance with any one of Claims 1 to 5, in which the parameters are in particular a gateway class (CPA), a gateway class address (ACAP) and a gateway name (NAP).

## Patentansprüche

1. System zur Datenübertragung zwischen einer Plattform (PF) und einem externen Softwaremodul (MLE), **dadurch gekennzeichnet, dass** es ein Generationsmittel (AS) aufweist, das auf der Plattform (PF) installiert ist, und das mit dem externen Softwaremodul (MLE) dialogiert, um dynamisch ein Gateway (AP) zu erzeugen, das in Abhängigkeit von Parametern (CAP, ACAP) definiert ist, die vom externen Softwaremodul übertragen werden, damit das externe Softwaremodul durch das Gateway einem auf der Plattform entfalteten Mittel entspricht, und wobei das Gateway (AP) ein allgemeines Mittel (GC) aufweist, das vom Generationsmittel (AS) aus geladen ist, um die Verbindung zwischen dem Gateway (AP) und dem externen Softwaremodul (MLE) zu verwalten, und ein spezifisches Mittel (CD), das es erlaubt, das Gateway, das vom Generationsmittel (AS) generiert ist, an die spezifischen Bedürfnisse des externen Softwaremoduls (MLE) anzupassen, das durch das Generationsmittel (AS) von einer Adresse (ACAP) aus geladen ist, die vom externen Softwaremodul (MLE) zur Plattform (PF) übertragen wird, um Nachrichten zu kodieren, die von der Plattform (PF) zum externen Softwaremodul (MLE) übertragen werden, und um Nachrichten zu dekodieren, die vom externen Softwaremodul zur Plattform übertragen werden.

2. System nach Anspruch 1, in dem die Adresse (ACAP), die vom externen Softwaremodul übertragen wird, eine Bibliothek mit Gateways (BI, BE) oder eine Bibliothek mit spezifischen Mitteln bezeichnet, die mit dem Generationsmittel (AS) verbunden ist oder durch ein Fernmeldenetz (RT) mit diesem verbunden ist.

3. System nach Anspruch 1 oder 2, in dem das spezifische Mittel (CD) ein Mittel aufweist, um die Nachrichten zu verschlüsseln und zu entschlüsseln.

4. System nach einem der Ansprüche 1 bis 3, in dem das allgemeine Mittel (GC) Rahmen der Datenübertragungsverwaltung und Nachrichtenrahmen unterscheidet (R3), die durch ein Anpassungsmittel (AD) des externen Softwaremoduls (MLE) übertragen werden, und Nachrichten (ME) aus den Nachrichtenrahmen entnimmt (R6), damit sie das spezifische Mittel (CD) dekodiert (R7) und sie in der Plattform (PF) hinterlegt (R8), und das Anpassungsmittel (AD) Dateneinheiten, die im externen Softwaremodul (MLE) sind, in Nachrichten (ME) gemäß einer spezifischen Sprache der Plattform (PF) konvertiert, die in Rahmen mit eingeschlossen sind, die dem Gateway zu übertragen sind und konvertiert (E3, E4, E5) umgekehrt Nachrichten (ME), die durch das spezifische Mittel (CD) kodiert sind und in den Nachrichtenrahmen übertragen sind, in Dateneinheiten.

5. System nach einem der Ansprüche 1 bis 4, in dem das Generationsmittel (AS) ein standardmäßig (AGP) vorbestimmtes Gateway generiert (S22), wenn zumindest der eine der Parameter (CAP, ACAP), die durch das externe Softwaremodul (MLE) übertragen werden, indefinit ist.

6. System nach einem der Ansprüche 1 bis 5, in dem die Parameter insbesondere eine Gateway-Klasse (CPA), eine Gateway-Klasse-Adresse (ACAP) und ein Gateway-Name (NAP) sind.
